# EUROPÄISCHE PATENTANMELDUNG

(11) **EP 2 022 436 A1**
(43) Veröffentlichungstag der Anmeldung: **11.02.2009**
(21) Anmeldenummer: 08004320.1
(22) Anmeldetag: 08.03.2008
(51) Int. Cl.: A61C 1/00, A61C 13/12

(54) **Dentalgerät**

(30) Priorität: 08.08.2007 DE 102007037454
(71) Anmelder: Renfert GmbH, 78247 Hilzingen (DE)
(72) Erfinder: Liebscher, Sven, 78239 Rielasingen-Worblingen (DE); Mahn, Dennis, 78465 Konstanz (DE)
(74) Vertreter: Daub, Thomas

(57) **Zusammenfassung**

Die Erfindung geht aus von einem Dentalgerät, insbesondere einem Fräsgerät, Modelltrimmer, Pinbohrgerät und/oder Alginatanmischgerät, mit einer Schaltereinheit (10).

Es wird vorgeschlagen, dass die Schaltereinheit (10) eine E-lektronikeinheit (11) aufweist.

## Beschreibung

### Stand der Technik

Die Erfindung geht aus von einem Dentalgerät nach dem Oberbegriff des Anspruchs 1.

Es sind bereits Dentalgeräte, insbesondere Fräsgeräte, Modelltrimmer, Pinbohrgeräte und/oder Alginatanmischgeräte, mit einer Schaltereinheit bekannt.

Der Erfindung liegt die Aufgabe zugrunde, ein Dentalgerät mit einer flexibel ausgestaltbaren Schaltereinheit bereitzustellen. Sie wird gemäß der Erfindung durch die Merkmale des Anspruchs 1 gelöst. Weitere Ausgestaltungen ergeben sich aus den Unteransprüchen.

### Vorteile der Erfindung

Die Erfindung geht aus von einem Dentalgerät, insbesondere einem Fräsgerät, Modelltrimmer, Pinbohrgerät und/oder Alginatanmischgerät, mit einer Schaltereinheit.

Es wird vorgeschlagen, dass die Schaltereinheit eine Elektronikeinheit aufweist. Unter einer "Elektronikeinheit" soll insbesondere eine Einheit verstanden werden, die zumindest einen Transistor und vorteilhafterweise zumindest einen Kondensator und/oder zumindest einen Widerstand und/oder zumindest eine Diode aufweist. Durch eine Elektronikeinheit kann die Schaltereinheit flexibel ausgestaltet und auf unterschiedliche Anforderungen von Dentalgeräten bzw. unterschiedliche Dentalgeräte vorteilhaft angepasst werden.

Ferner wird vorgeschlagen, dass die Elektronikeinheit eine Steuereinheit umfasst. Unter einer "Steuereinheit" soll insbesondere eine Einheit verstanden werden, die eine Recheneinheit und eine Speichereinheit mit einem in der Speichereinheit gespeicherten Betriebsprogramm umfasst. Durch eine Steuereinheit kann die Schaltereinheit besonders flexibel ausgestaltet werden.

Weiter wird vorgeschlagen, dass die Schaltereinheit dazu vorgesehen ist, einen Ein- bzw. Ausschaltvorgang auszulösen. Unter "vorgesehen" soll insbesondere speziell ausgestattet, ausgelegt und/oder programmiert verstanden werden. Durch eine erfindungsgemäße Schaltereinheit können erweitere Einschaltfunktionen, wie beispielsweise ein verzögertes Anlaufen einer Antriebseinheit, einfach erreicht werden.

Vorteilhaferweise umfasst das Dentalgerät eine Relaiseinheit, die dazu vorgesehen ist, bei dem Ein- bzw. Ausschaltvorgang eine Spannung zu schalten. Mittels einer Relaiseinheit können bei einer kleinen Dimensionierung der Schaltereinheit besonders hohe elektrische Spannungen und Ströme geschalten werden.

Ferner wird vorgeschlagen, dass die Steuereinheit dazu vorgesehen ist, eine Sicherheitsschaltung auszulösen. Mittels einer Sicherheitsschaltung kann eine Sicherheit für einen Benutzer erhöht werden.

Insbesondere ist es vorteilhaft, wenn die Sicherheitsschaltung dazu vorgesehen ist, ein selbstständiges Einschalten zu vermeiden, wodurch ein plötzliches unerwartetes Einschalten, beispielsweise ein Wiedereinschalten nach einem Stromausfall, des Dentalgeräts vermieden werden kann, wobei unter einem "Wiedereinschalten" insbesondere verstanden werden soll, dass das Dentalgerät unmittelbar vor einem Stromausfall eingeschaltet war und sich unmittelbar nach dem Stromausfall wieder einschaltet.

Weiter wird vorgeschlagen, dass die Schaltereinheit im Wesentlichen auf einer nach innen gerichteten Seite 14 einer Gehäuseoberfläche des Dentalgeräts liegt. Unter "im Wesentlichen" soll in diesem Zusammenhang insbesondere verstanden werden, dass sämtliche Teile der Schaltereinheit maximal 5 mm über die Gehäuseoberfläche in eine nach außen gerichtete Richtung herausragen, wobei maximal 3 mm vorteilhaft und maximal 1 mm besonders vorteilhaft ist. Unter einer Gehäuseoberfläche soll eine nach außen gerichtete Haupterstreckungsfläche eines Gehäuses des Dentalgeräts verstanden werden. Durch eine solche Ausgestaltung kann eine Oberfläche erreicht werden, die besonders einfach zu reinigen ist.

Umfasst das Dentalgerät eine Folie, die die Schaltereinheit abdeckt, kann das Dentalgerät bzw. die Schaltereinheit besonders gut abgedichtet und gegen Schmutz geschützt werden.

Vorteilhafterweise weist die Folie eine Prägung auf, die dazu vorgesehen ist, die Schaltereinheit zu kennzeichnen. Dadurch kann die Schaltereinheit besonders einfach gekennzeichnet werden.

In einer Ausgestaltung der Erfindung wird vorgeschlagen, dass die Schaltereinheit zumindest einen Druckschalter umfasst. Ein Druckschalter ist besonders komfortabel zu schalten. Unter einem "Druckschalter" soll insbesondere ein Schalter verstanden werden, der, wenn er heruntergedrückt wird, einen elektrischen Kontakt herstellt, wobei der elektrische Kontakt wieder getrennt wird, wenn der Schalter in seine Ausgangslage zurückkehrt. Der Schalter kehrt in seine Ausgangslage zurück, wenn eine Kraft, die den Schalter herunterdrückt, weggenommen wird. Alternativ kann er auch so ausgestaltet werden, dass er in seine Ausgangslage zurückkehrt, wenn er erneut betätigt wird. Vorzugsweise wird der Druckschalter durch einen Benutzer betätigt.

Ferner wird vorgeschlagen, dass das Dentalgerät zumindest einen berührungssensitiven Schalter umfasst, wie beispielsweise einen Berührungsschalter, einen Touch-Slider oder einen zumindest teilweise segmentförmig ausgeführten Rund-Slider. Durch einen berührungssensitiven Schalter kann ein besonders hoher Bedienkomfort erreicht werden.

Weiter wird vorgeschlagen, dass das Dentalgerät ein Leuchtmittel aufweist, das dazu vorgesehen ist, einen Schaltzustand zu kennzeichnen. Durch ein Leuchtmittel kann der Schaltzustand der Schaltereinheit besonders einfach und gut sichtbar gekennzeichnet werden.

Vorteilhafterweise ist das Leuchtmittel als eine LED ausgebildet. Eine LED weist bei einem geringen Kostenaufwand eine besonders hohe Lebensdauer auf.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Schnittzeichnung der Schaltereinheit ei- nes Dentalgeräts,
- Fig. 2: schematisch der Aufbau der Steuereinheit des Dentalgeräts und
- Fig. 3: das Dentalgerät in einer Frontansicht.

### Beschreibung des Ausführungsbeispiels

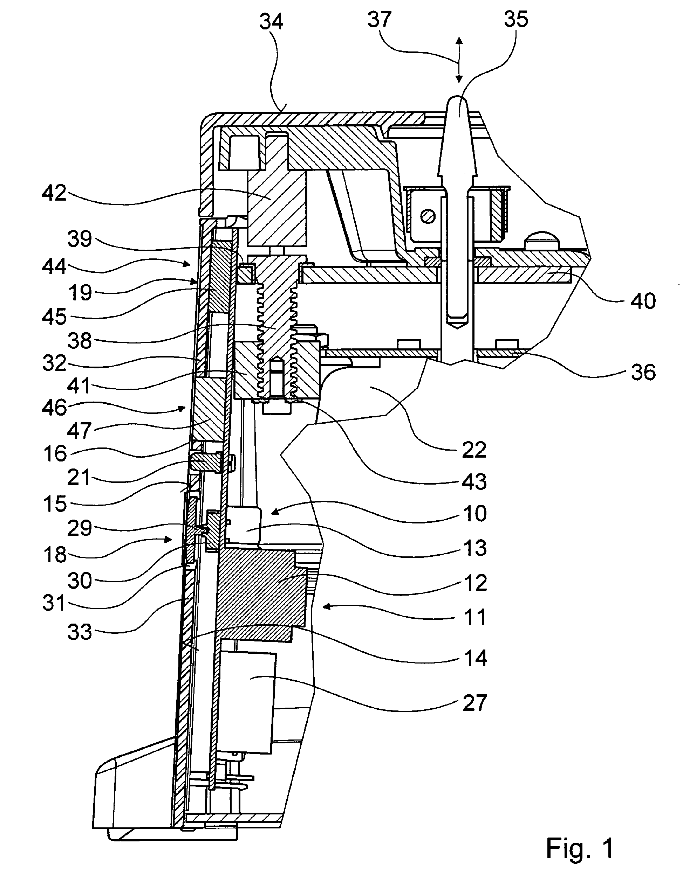

Figur 1 zeigt eine Schnittzeichnung eines Dentalgeräts mit einer Schaltereinheit 10, die eine Elektronikeinheit 11 aufweist. Mittels der Schaltereinheit 10 wird ein Ein- bzw. Ausschaltvorgang ausgelöst, wodurch das Dentalgerät aktiviert bzw. deaktiviert werden kann.

Die Elektronikeinheit 11 umfasst eine Steuereinheit 12. Beim Aktivieren des Gerätes wird während des Einschaltvorgangs von einer Relaiseinheit 13, die durch die Steuereinheit 12 gesteuert wird, eine Spannung geschaltet, die eine Antriebseinheit 22, die als ein elektrischer Motor ausgebildet ist, des Dentalgeräts antreibt. Beim Deaktivieren des Dentalgeräts bzw. während des Ausschaltvorgangs trennt die Relaiseinheit 13 die Antriebseinheit 22 von der Spannung.

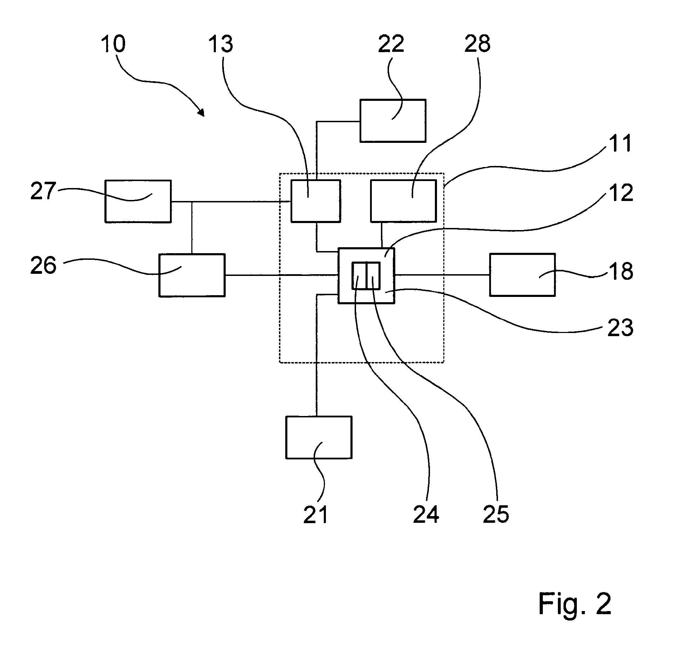

Zur Steuerung der Relaiseinheit 13 und weiterer Bauteile umfasst die Steuereinheit 12 eine Prozessoreinheit 23, die eine Recheneinheit 24 und eine Speichereinheit 25 mit einem darin gespeicherten Betriebsprogramm umfasst (Figur 2). Die Prozessoreinheit 23 wird über eine Spannungsversorgungseinheit 26, die eine Netzspannung von 220 V eines Netzgeräts 27 in eine niedrige Versorgungsspannung umwandelt, mit Strom versorgt. Zur Überwachung der Versorgungsspannung umfasst die Elektronikeinheit 11 eine Spannungsüberwachungseinheit 28, die bei einer fehlerhaften Betriebsspannung einen Fehlerimpuls an die Prozessoreinheit 23 sendet. Die Relaiseinheit 13, die die Antriebseinheit 22 in einem aktivierten Zustand mit der Netzspannung versorgt, wird über die Prozessoreinheit 23 geschlossen und verbindet dann die Antriebseinheit 22 mit dem Netzgerät 27.

In die Steuereinheit 12 implementiert ist eine Sicherheitsschaltung, die ein selbstständiges Einschalten des Dentalgeräts verhindert. Insbesondere verhindert die Sicherheitsschaltung ein Wiedereinschalten nach einem Stromausfall, so dass das Dentalgerät nach dem Stromausfall deaktiviert bleibt, auch wenn es unmittelbar vor dem Stromausfall aktiviert war, indem es ein Schließen der Relaiseinheit 13 verhindert.

Die Schaltereinheit 10 umfasst einen Druckschalter 18, in dem ein Druckstößel 29 und ein Schaltmittel 30, das bei Betätigen des Druckschalters 18 einen elektrischen Kontakt schließt und nach dem Betätigen wieder öffnet, angeordnet sind. Der Druckschalter 18 sendet beim Betätigen einen Schaltimpuls an die Steuereinheit 12, worauf die Prozessoreinheit 23 den Ein- bzw. Ausschaltvorgang vornimmt.

Der Druckstößel 29 ist in einer Aussparung 31 in einer Frontseite 32 eines Gehäuses 33 des Dentalgeräts angeordnet. Eine Oberfläche des Druckstößels 29 und eine Gehäuseoberfläche 15 bilden eine Ebene. Auf die Gehäuseoberfläche 15 und die Oberfläche des Druckstößels 29 ist eine Folie 16 aufgebracht, die die Schaltereinheit 10 abdeckt. Die Folie 16 weist eine Prägung 17 auf, mittels der der Druckschalter 18 der Schaltereinheit 10 gekennzeichnet ist. Zusätzlich ist auf der Folie 16 ein farblicher Aufdruck aufgebracht, mittels dem der Druckschalter 18 hervorgehoben und beschriftet ist.

Weiter ist in der Schaltereinheit 10 ein Leuchtmittel 21 angeordnet, mittels dem ein Schaltzustand der Schaltereinheit 10 gekennzeichnet ist. In einem aktivierten Schaltzustand wird das Leuchtmittel 21, das als eine LED ausgebildet ist, über die Prozessoreinheit 23 mit Strom versorgt, so dass das Leuchtmittel 21 leuchtet. Das Leuchtmittel 21 ist versetzt zum Druckstößel 29 angeordnet, prinzipiell ist aber auch eine Anordnung des Leuchtmittels 21 in dem Druckstößel 29 denkbar.

Das Dentalgerät, in dem die Schaltereinheit 10 angeordnet ist, weist eine Bearbeitungseinheit 35 auf, die mittels einer Verstelleinheit in einer Höhe verstellt werden kann. Die Bearbeitungseinheit 35 wird über die Antriebseinheit 22 angetrieben. Die Bearbeitungseinheit 35 und die Antriebseinheit 22 sind auf einem gemeinsamen Führungsblech 36 angeordnet. Bei einer Einstellung einer Höhe 37 der Bearbeitungseinheit 35, die als eine Fräs- und/oder Schleifeinheit ausgebildet ist, wird die Bearbeitungseinheit 35 gemeinsam mit der Antriebseinheit 22 verstellt.

Zum Verstellen der Bearbeitungseinheit 35 umfasst das Dentalgerät eine Verstelleinheit mit einer Verstellschraube 38, die als eine Trapezgewindespindel ausgebildet ist. In einem oberen Teil weist die Verstellschraube 38 ein Gleitlager 39 auf, mit dem sie sich drehbar auf einer Gehäuseplatte 40 aufstützt, die fest mit dem Gehäuse 33 des Dentalgeräts verbunden ist. Das Gleitlager 39 erlaubt eine Drehung um eine Haupterstreckungsachse und verhindert ein axiales Verschieben der Verstellschraube 38 zumindest in einer Richtung. Mit einem unteren Teil, der als ein Trapezgewinde ausgebildet ist, greift die Verstellschraube 38 in eine Verstellmutter 41 ein, die als eine Trapezgewindemutter ausgebildet ist. Die Verstellmutter 41 ist fest mit dem Führungsblech 36, auf dem die Bearbeitungseinheit 35 und die Antriebseinheit 22 angeordnet sind, verbunden. Durch eine Drehung der Verstellschraube 38 wird ein Abstand zwischen dem Führungsblech 36 und der Gehäuseplatte 40 verstellt, wodurch die Höhe 37, die die Bearbeitungseinheit 35 über eine Arbeitsplatte 34 hinausragt, verstellt werden kann. Durch ein Anschlagmittel 43, das als eine U-Scheibe ausgeführt und mit einem unteren Ende der Verstellschraube 38 verbunden ist, wird verhindert, dass die Verstellschraube 38 aus der Verstellmutter 41 herausgedreht werden kann. Durch das Anschlagmittel 43 ist ein unterer Grenzwert für die Höhe 37 gegeben. Ein oberer Grenzwert für die Höhe 37 ist erreicht, wenn sich die Gehäuseplatte 40 und das Führungsblech 36 berühren.

Um das Führungsblech 36 zu führen, umfasst die Verstelleinheit zwei nicht näher dargestellte Gleitlagerpaare, die je zwei paarweise angeordnete als Lineargleitlager ausgeführte Gleitlager umfasst. Die Gleitlagerpaare führen das Führungsblech 36 entlang zweier Führungsschienen, die senkrecht zur Arbeitsplatte 34 angeordnet sind. Durch die Führung mittels der Gleitlagerpaare, wird eine exakte Führung der Bearbeitungseinheit 35 erreicht.

Die Höhe 37 wird mittels einer Bedieneinheit 44 eingestellt, die zwei berührungssensitive Schalter 19, 20 umfasst. Beide Schalter 19, 20, wobei in Figur 1 nur der Schalter 19 dargestellt ist, weisen Schaltmittel 45 auf, die bei einer drucklosen Berührung durch einen Benutzer einen Schaltimpuls an eine Elektronikeinheit aussenden. Die Elektronikeinheit, die einteilig mit der Elektronikeinheit 11 und der Steuereinheit 12 zum Ein- und Ausschalten des Dentalgeräts ausgeführt ist, steuert eine Motoreinheit 42 an, die die Verstellschraube 38 antreibt. Die Motoreinheit 42 ist in diesem Ausführungsbeispiel direkt mit der Verstellschraube 38 verbunden. Alternativ kann zwischen der Motoreinheit 42 und der Verstellschraube 38 ein Getriebe angeordnet werden, das eine vorteilhafte Übersetzung zwischen der Motoreinheit 42 und der Verstellschraube 38 bereitstellt. Die Motoreinheit 42, die als ein Elektromotor ausgebildet ist, kann mittels der Schalter 19, 20 in unterschiedlichen Drehrichtungen angesteuert werden, wodurch eine Drehung der Verstellschraube 38 in unterschiedliche Drehrichtungen erreicht und somit die Höhe 37 verstellt werden kann.

Alternativ kann anstelle der berührungssensitiven Schalter 19, 20 ein Touch-Slider eingebaut werden, der im Wesentlichen aus aneinandergereihten berührungssensitiven Schaltern besteht und eine Bewegung beispielsweise eines Fingers entlang einer Anordnungsrichtung der berührungssensitiven Schalter 19, 20 detektiert. Ein solcher Touch-Slider kann vorteilhafterweise segmentförmig ausgestaltet sein, wodurch sich für einen Benutzer eine Bedienung analog zu einem Stellrad ergibt.

Weiter ist es denkbar, neben den Schaltern 19, 20 der Bedieneinheit 44 auch den Druckschalter 18 als einen berührungssensitiven Schalter auszugestalten, wodurch vorteilhafterweise alle Schalter 18, 19, 20 als berührungssensitive Schalter ausgebildet sind.

Die Schalter 19, 20 sind in Aussparungen in einer Frontseite eines Gehäuses des Dentalgeräts angeordnet. Eine Oberfläche der Schalter 19, 20 liegt mit der Oberfläche des Druckstößels 29 des Druckschalters 18 und der Gehäuseoberfläche 15 in einer Ebene, wodurch die Bedieneinheit 44 wie auch die Schaltereinheit 10 im Wesentlichen auf der nach innen gerichteten Seite 14 der Gehäuseoberfläche 15 des Dentalgeräts liegt. Die Folie 16, die die Gehäuseoberfläche 15 und die Oberfläche des Druckstößels 29 abdeckt, deckt auch die Schalter 19, 20 ab. Die Schalter 19, 20 sind ebenfalls durch die Prägung 17 und den farblichen Aufdruck auf der Folie 16 gekennzeichnet.

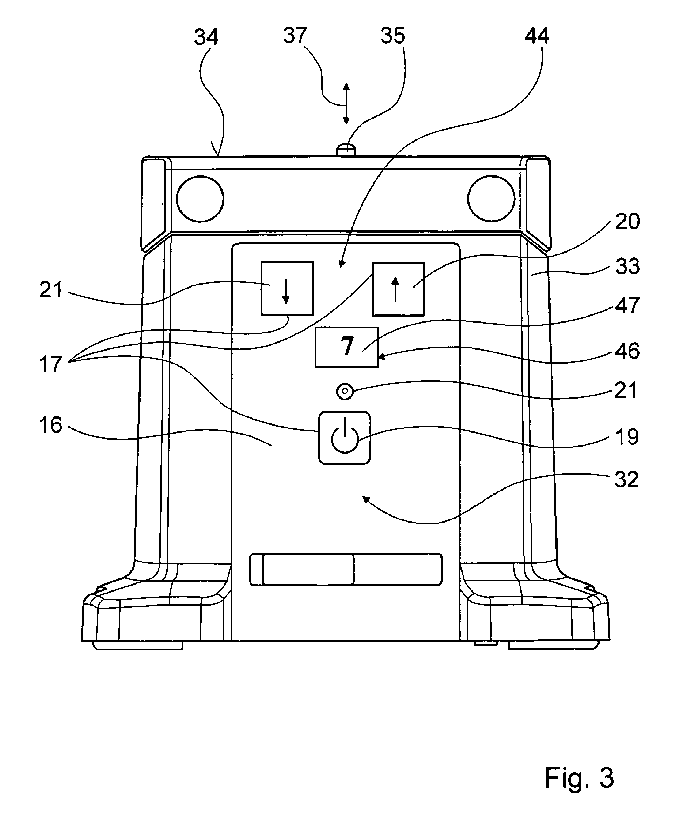

In der Gehäuseoberfläche 15, die die Bedieneinheit 44 aufweist, ist eine Anzeigeeinheit 46 angeordnet, die die mittels der Bedieneinheit 44 aktuell eingestellte Höhe 37 anzeigt (Figur 3). Die Anzeigeeinheit 46 umfasst ein Display 47, das als ein LCD-Display ausgestaltet ist und das in einem aktivierten Zustand des Dentalgeräts die Höhe 37 als einen numerischen Wert in willkürlichen Einheiten ausgibt. Alternativ kann die Anzeigeeinheit 46 auch eine Balkenanzeige umfassen, die mittels verschiedener LED-Leuchtmittel realisiert werden kann.

### Bezugszeichen

- 10: Schaltereinheit
- 11: Elektronikeinheit
- 12: Steuereinheit
- 13: Relaiseinheit
- 14: Seite
- 15: Gehäuseoberfläche
- 16: Folie
- 17: Prägung
- 18: Druckschalter
- 19: Schalter
- 20: Schalter
- 21: Leuchtmittel
- 22: Antriebseinheit
- 23: Prozessoreinheit
- 24: Recheneinheit
- 25: Speichereinheit
- 26: Spannungsversorgungs- einheit
- 27: Netzgerät
- 28: Spannungsüberwachungs- einheit
- 29: Druckstößel
- 30: Schaltmittel
- 31: Aussparung
- 32: Frontseite
- 33: Gehäuse
- 34: Arbeitsplatte
- 35: Bearbeitungseinheit
- 36: Führungsblech
- 37: Höhe
- 38: Verstellschraube
- 39: Gleitlager
- 40: Gehäuseplatte
- 41: Verstellmutter
- 42: Motoreinheit
- 43: Anschlagmittel
- 44: Bedieneinheit
- 45: Schaltmittel
- 46: Anzeigeeinheit
- 47: Display

## Patentansprüche

1. Dentalgerät, insbesondere Fräsgerät, Modelltrimmer, Pinbohrgerät, Alginatanmischgerät, mit einer Schaltereinheit (10),
**dadurch gekennzeichnet, dass**
die Schaltereinheit (10) eine Elektronikeinheit (11) aufweist.

2. Dentalgerät nach Anspruch 1,
**dadurch gekennzeichnet, dass**
die Elektronikeinheit (11) eine Steuereinheit (12) umfasst.

3. Dentalgerät nach Anspruch 1 oder 2,
**dadurch gekennzeichnet, dass**
die Schaltereinheit (10) dazu vorgesehen ist, einen Ein- bzw. Ausschaltvorgang auszulösen.

4. Dentalgerät nach Anspruch 3,
**gekennzeichnet durch**
eine Relaiseinheit (13), die dazu vorgesehen ist, bei dem Ein- bzw. Ausschaltvorgang eine Spannung zu schalten.

5. Dentalgerät zumindest nach Anspruch 2,
**dadurch gekennzeichnet, dass**
die Steuereinheit (12) dazu vorgesehen ist, eine Sicherheitsschaltung auszulösen.

6. Dentalgerät nach Anspruch 5,
**dadurch gekennzeichnet, dass**
die Sicherheitsschaltung dazu vorgesehen ist, ein selbstständiges Einschalten zu vermeiden.

7. Dentalgerät nach einem der vorhergehenden Ansprüche,
**dadurch gekennzeichnet, dass**
die Schaltereinheit (10) im Wesentlichen auf einer nach innen gerichteten Seite (14) einer Gehäuseoberfläche (15) des Dentalgeräts liegt.

8. Dentalgerät nach einem der vorhergehenden Ansprüche,
**gekennzeichnet durch**
eine Folie (16), die die Schaltereinheit (10) abdeckt.

9. Dentalgerät nach Anspruch 8,
**dadurch gekennzeichnet, dass**
die Folie (16) eine Prägung (17) aufweist, die dazu vorgesehen ist, die Schaltereinheit (10) zu kennzeichnen.

10. Dentalgerät nach einem der vorhergehenden Ansprüche,
**dadurch gekennzeichnet, dass**
die Schaltereinheit (10) zumindest einen Druckschalter (18) umfasst.

11. Dentalgerät nach einem der vorhergehenden Ansprüche,
**gekennzeichnet durch**
zumindest einen berührungssensitiven Schalter (19, 20).

12. Dentalgerät nach einem der vorhergehenden Ansprüche,
**gekennzeichnet durch**
ein Leuchtmittel (21), das dazu vorgesehen ist, einen Schaltzustand zu kennzeichnen.

13. Dentalgerät nach Anspruch 12,
**dadurch gekennzeichnet, dass**
das Leuchtmittel (21) als eine LED ausgebildet ist.

14. Verfahren für ein Dentalgerät, insbesondere für ein Dentalgerät nach einem der vorhergehenden Ansprüche,
**dadurch gekennzeichnet, dass**
ein selbstständiges Einschalten des Dentalgeräts mittels einer Steuereinheit (12) vermieden wird.
